# FASCICULE DE BREVET EUROPEEN

(11) **EP 3 430 505 B1**
(45) Date de publication et mention de la délivrance du brevet: **30.09.2020**
(21) Numéro de dépôt: 17715408.5
(22) Date de dépôt: 14.03.2017
(51) Int. Cl.: G06F 3/0488, G06Q 30/02

(54) **PROCEDE ET SYSTEME D'INTERACTION AVEC DES UTILISATEURS**
VERFAHREN UND SYSTEM ZUR INTERAKTION MIT BENUTZERN
METHOD AND SYSTEM FOR INTERACTION WITH USERS

(30) Priorité: 15.03.2016 FR 1652187
(43) Date de publication de la demande: 23.01.2019
(73) Titulaire: Evalandgo, 34960 Montpellier (FR)
(72) Inventeur: LEROUGE, Sébastien, 34160 Castries (FR)
(74) Mandataire: IPAZ
(86) Numéro de dépôt international: PCT/EP2017/056002
(87) Numéro de publication internationale: WO 2017/157944

(56) Documents cités:
- EP-A1- 2 784 737
- WO-A1-2010/029289
- US-A- 5 822 744
- US-B1- 8 786 560

## Description

### Domaine technique

La présente invention concerne un procédé d'interaction avec des utilisateurs. Elle concerne également un système d'interaction avec les utilisateurs mettant en œuvre un tel procédé.

Le domaine de l'invention est plus particulièrement, mais de manière non limitative, celui de l'interaction avec des personnes par l'intermédiaire de bornes de sélection, disposées notamment dans des lieux accueillant du public ou des personnes, en vue, par exemple, de mesurer une donnée relative à un taux de satisfaction.

### Etat de la technique

Il existe actuellement différents types de bornes permettant d'interagir avec des utilisateurs, notamment dans des lieux publics, en vue par exemple de mesurer un taux de satisfaction des usagers d'un service. Plus généralement, ces bornes peuvent être utilisées pour des applications variées dans lesquelles on souhaite obtenir une collecte d'information. Le document EP2784737 A1 divulgue un exemple d'une telle application.

Ces bornes d'interaction comprennent un ou plusieurs boutons de sélection, par exemple mécaniques, permettant de sélectionner une proposition associée à une question affichée au niveau de la borne.

Ces bornes sont souvent disposées dans des lieux publics pouvant accueillir tous types de publics, y compris des enfants. Ces derniers peuvent être tentés d'appuyer sur les boutons de sélection de la borne, et par conséquent entrer une sélection aléatoire, qui vient fausser la précision des informations collectées par la borne.

Par ailleurs, il est possible qu'un utilisateur souhaitant entrer une sélection appuie plusieurs fois sur un bouton, par exemple pour s'assurer de la prise en compte de sa sélection, ce qui vient également fausser l'information collectée.

En outre, lorsqu'un bouton de sélection fonctionne mal, il est possible que ce dernier entre plusieurs sélections pour un unique appui de la part d'un utilisateur, ou même sans aucun appui de la part d'un utilisateur. Un tel incident est difficilement détectable in situ et vient également fausser la collecte d'information.

Un but de la présente invention est de remédier aux inconvénients précités.

Un autre but de la présente invention est de proposer un procédé et un système d'interaction avec des utilisateurs permettant une collecte plus précise d'informations.

Il est aussi un but de la présente invention de proposer un procédé et un système d'interaction avec des utilisateurs permettant de diminuer, voire d'éliminer, des sélections faussant la collecte d'information.

### Exposé de l'invention

L'invention est telle que définie dans les revendications. Les modes de réalisation qui ne tombent pas sous l'étendue des revendications doivent être vus comme des exemples utiles pour comprendre l'invention. Au moins un de ces objectifs est atteint par un procédé d'interaction avec des utilisateurs comprenant les étapes suivantes :
- détecter des sélections au niveau d'une borne d'interaction comprenant au moins un bouton de sélection, et
- pour chaque sélection, transmission par ladite borne, vers un serveur distant, d'une donnée horaire, dite heure de sélection, représentant le moment de réalisation de ladite sélection ;
caractérisé en ce qu'il comprend une étape de filtrage, par ledit serveur, d'au moins une sélection en fonction de son heure de sélection.

Ainsi, le procédé selon l'invention propose de filtrer une ou plusieurs sélections en fonction de l'heure de sélection de ladite ou desdites sélections. Il est par conséquent possible d'éliminer une ou plusieurs sélections qui viennent fausser la collecte d'information, telles que par exemple des sélections aléatoires réalisées par un enfant ou des sélections multiples réalisées par un utilisateur insistant, ou encore des sélections causées par un bouton de sélection défaillant. Le procédé selon l'invention permet ainsi de réaliser une collecte d'information, par exemple une mesure d'un taux de satisfaction, de manière plus précise.

La borne d'interaction peut comprendre un unique bouton de sélection ou plusieurs boutons de sélection.

Lorsque la borne d'interaction comprend plusieurs boutons de sélection, l'étape de transmission peut en outre comprendre une transmission de ladite borne vers le serveur d'une donnée, dite bouton de sélection, relative au bouton sélectionné en association avec l'heure de la sélection.

Avantageusement, l'étape de filtrage peut comprendre :
- une détermination d'une durée séparant au moins deux sélections consécutives en fonction des heures de sélection desdites sélections, et
- une élimination, ou non, de l'une au moins desdites sélections en fonction de ladite durée et d'une durée seuil prédéterminée.

En effet, la durée entre plusieurs sélections permet de déterminer si lesdites sélections sont des fausses sélections, réalisées par exemple par un enfant ou un utilisateur insistant ou un bouton de sélection défaillant.

Suivant un premier exemple, lorsqu'une série d'au moins trois sélections consécutives sont séparées, deux à deux, d'une durée très courte, alors il est fort probable que ces sélections soient réalisées par un enfant, auquel cas chacune de ces trois sélections sont éliminées lors de l'étape de filtrage. Ainsi, le procédé selon l'invention permet d'éliminer toutes les sélections réalisées par un enfant, y compris la première sélection, ce qui améliore la précision de la collecte d'information.

Suivant un deuxième exemple, lorsqu'une série d'exactement deux sélections, en particulier identiques, sont séparées d'une durée très courte, il est probable que ces sélections soient réalisées par un utilisateur insistant qui souhaite la bonne prise en compte de sa sélection. On se trouve alors dans le cas d'une sélection redondante. L'étape de filtrage permet alors d'éliminer uniquement l'une des deux sélections, ce qui permet d'améliorer la collecte d'information en éliminant uniquement l'une des deux sélections et non toutes les sélections.

Le procédé d'interaction selon l'invention peut comprendre une étape d'affichage d'au moins une page, en particulier d'une série de page, sur un écran d'affichage de la borne.

L'étape de transmission peut en outre comprendre une transmission, vers le serveur, d'une donnée, dite d'affichage.

La donnée d'affichage peut être transmise à chaque modification de l'affichage, par exemple pour indiquer le début de l'affichage d'une nouvelle page.

Suivant un mode de réalisation, la donnée d'affichage peut en particulier être transmise en association avec au moins une, en particulier chaque, heure de sélection, et peut être relative à la page affichée à ladite heure de sélection.

Dans ce cas, l'étape de filtrage peut en outre réalisée en fonction de ladite donnée d'affichage.

Ainsi, le procédé selon l'invention permet de réaliser une collecte d'information plus précise car il tient compte de l'état de l'affichage réalisé sur ladite borne, pour déterminer si la sélection réalisée est une sélection dont il faut tenir compte ou non.

Avantageusement, la donnée d'affichage associée à une, en particulier à chaque, heure de sélection peut comprendre une donnée signalant un type de page affichée, et en particulier si la page affichée est une :
- une page comprenant une question, ou
- une page de transition.

Une telle page de transition peut par exemple être une page d'accueil, une page de confirmation d'une sélection préalable, une page intermédiaire entre deux questions, une page de remerciements, une page de publicité ou une page d'information.

Suivant un mode de réalisation, l'étape de filtrage peut réaliser une élimination d'une sélection lorsque la donnée d'affichage qui lui est associée signale l'affichage d'une page de transition au moment de ladite sélection.

Dans la présente demande, une question peut être :
- un message interrogatif associé à une ou plusieurs options de réponse, ou
- un message de confirmation que l'utilisateur accepte ou refuse en appuyant sur un bouton de sélection, ou
- un message d'infirmation que l'utilisateur accepte ou refuse en appuyant sur un bouton de sélection.

Avantageusement, l'étape de filtrage peut en outre être réalisée en fonction :
- d'une durée écoulée entre un début d'affichage d'une page et une sélection réalisée lors de l'affichage de ladite page, et
- d'une durée, dite durée minimum de lecture, prédéterminée.

Ainsi, le procédé selon l'invention permet d'éliminer les sélections réalisées alors que la question affichée sur une page n'a pas été lue entièrement, ce qui permet d'améliorer la précision de l'information collectée.

La durée minimum de lecture peut être constante et identique pour au moins deux questions affichées.

Alternativement, pour au moins une question affichée, la durée minimum de lecture peut être fonction de ladite question.

En particulier, la donnée d'affichage associée à une heure de sélection peut comprendre une donnée d'identification d'une question en cours d'affichage lors de ladite sélection.

Dans ce cas, la durée minimum de lecture peut être fonction de ladite donnée d'identification.

La durée minimum de lecture associée à une question peut être lue depuis un moyen de mémorisation, dans lequel elle est préalablement renseignée en association avec l'identification de cette question,

Ainsi, le procédé selon l'invention permet d'ajuster la collecte d'information au type de question posée, ce qui permet de réaliser une collecte plus précise. En effet, la durée pour lire une question courte n'est pas la même que celle nécessaire à la lecture d'une question longue. De plus, la durée nécessaire à la lecture d'une question proposant une option de réponse unique n'est pas la même que celle nécessaire à la lecture d'une question proposant plusieurs options de réponse.

Suivant une version de réalisation, l'heure de sélection d'une sélection peut correspondre à une durée qui s'est écoulée entre le début de l'affichage d'une page, en particulier d'une question, pour laquelle la sélection a été entrée, et ladite sélection.

Dans ce cas, l'heure de sélection est relative et est décomptée par rapport à une référence qui est le début de l'affichage de la page comprenant la question. Elle est donc mise à zéro à chaque affichage d'une nouvelle page, en particulier d'une page comprenant une question.

Dans cette version, suivant un exemple de réalisation non limitatif, l'étape de transmission peut transmettre les données suivantes pour chaque sélection :
- bouton sélectionné, par exemple « bouton B1 » ;
- identifiant de la question/page affichée, par exemple « Question Q1 » ;
- heure de sélection représentant la durée écoulée entre le début de l'affichage de ladite question/page et ladite sélection, par exemple « 2secondes ».

Suivant une autre version, le procédé selon l'invention peut comprendre, pour chaque page affichée, en particulier pour chaque question affichée, une transmission, de la borne vers le serveur, d'une donnée horaire, dite heure affichage, représentant le moment où l'affichage de ladite page, respectivement de ladite question, a commencé.

Dans ce cas, la durée écoulée entre le début d'affichage d'une page et une sélection entrée est calculée en fonction de ladite heure d'affichage et de l'heure de sélection de ladite sélection.

Dans ce cas, l'heure de sélection, respectivement l'heure d'affichage, est lue depuis une horloge, par exemple une horloge interne à la borne d'interaction.

Dans cette version, suivant un exemple de réalisation nullement limitatif, l'étape de transmission peut transmettre pour chaque sélection les données suivantes :
- identification du bouton sélectionné, par exemple « Bouton B1 » ;
- identifiant de la question/page affichée, par exemple « Question Q1 » ;
- heure d'affichage de la question/page, par rapport à une horloge interne de la borne, par exemple « 17h58m40s » ; et
- heure de sélection représentant le moment de la sélection par rapport à une horloge interne de la borne, par exemple « 17h58m43s ».

Dans une version, l'étape de transmission de données peut être réalisée à une fréquence prédéterminée, par exemple toutes les heures.

Alternativement ou en plus, l'étape de transmission de données peut être réalisée sur demande du serveur.

Suivant une autre alternative, l'étape de transmission de données peut être réalisée après un nombre prédéterminé de sélections, par exemple 100 sélections.

Suivant encore une autre alternative, l'étape de transmission de données peut être réalisée à chaque sélection.

Suivant un autre aspect de la même invention, il est proposé un système d'interaction avec des utilisateurs comprenant :
- un serveur, et
- au moins une borne d'interaction en communication avec ledit serveur ;
configurés pour mettre en œuvre les étapes du procédé selon l'invention

Avantageusement, au moins une borne peut être en communication avec le serveur au travers d'un réseau de communication sans fil, tel que par exemple le réseau de téléphonie mobile.

Alternativement, au moins une borne peut être en communication avec le serveur au travers d'une liaison filaire.

Lorsque le système comprend plusieurs bornes d'interaction, les étapes du procédé sont réalisées de manière indépendante pour chaque borne d'interaction.

Dans ce cas, chaque borne d'interaction peut en outre transmettre une donnée d'identification de ladite borne, lors de l'étape de transmission de données.

### Description des figures et modes de réalisation

D'autres avantages et caractéristiques apparaîtront à l'examen de la description détaillée d'exemples nullement limitatifs, et des dessins annexés sur lesquels :
- la FIGURES 1 est une représentation schématique d'un exemple de réalisation non limitatif du procédé selon l'invention ;
- la FIGURE 2 est une représentation schématique d'une borne d'interaction qui peut être utilisée dans un système selon l'invention ;
- la FIGURE 3 est une représentation schématique d'un exemple de réalisation non limitatif d'un module d'interaction d'une borne d'interaction qui peut être utilisée dans un système selon l'invention ;
- la FIGURE 4 est une représentation schématique d'un exemple de réalisation non limitatif du système selon l'invention ; et
- la FIGURE 5 est une représentation schématique de plusieurs exemples non limitatifs de filtrage de sélections conformément à la présente invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

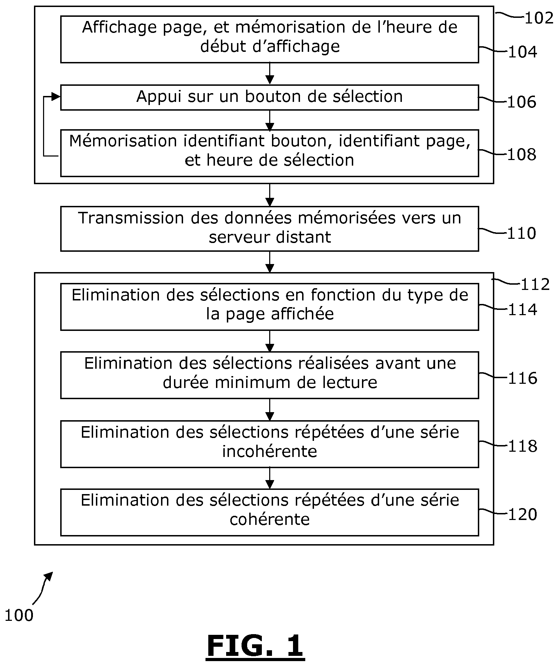

La FIGURE 1 est une représentation schématique d'un exemple de réalisation non limitatif du procédé selon l'invention

Le procédé 100 représenté sur la FIGURE 1 comprend une phase 102 de de collecte des sélections, réalisée au niveau d'une borne d'interaction, et comprenant les étapes suivantes.

Une page est affichée sur un écran d'affichage d'une borne d'interaction lors d'une étape 104. L'heure d'affichage de la question/page est mémorisée en association avec un identifiant de la question dans une mémoire interne de la borne. Cette heure d'affichage est référencée par une horloge interne de la borne. Autrement dit, l'heure d'affichage correspond à la valeur affichée par l'horloge interne de la borne au moment où l'affichage de la page commence.

Lors d'une étape 106, une sélection est réalisée par appui sur un bouton de sélection de la borne.

Cette sélection déclenche, une étape 108 qui mémorise les données suivantes :
- identifiant du bouton sélectionné, par exemple « Bouton A » ;
- heure de sélection, référencée par l'horloge interne de la borne : autrement l'heure de sélection correspond à la valeur affichée par l'horloge interne de la borne au moment de la sélection ; et
- identifiant de la page affichée, par exemple « Q1 »

Cette étape 108 est réalisée à chaque nouvelle sélection, c'est-à-dire à chaque nouvelle occurrence de l'étape 106.

La phase 102 peut comprendre un affichage d'une nouvelle page, comprenant ou non une question. Dans ce cas, la phase de collecte 102 est réitérée à partir de l'étape 104, pour chaque nouvelle page affichée.

La phase 102 de collecte de sélections est réalisée autant de fois que souhaitée, avant une étape 110 de transmission des données mémorisées vers un serveur distant, par exemple au travers d'un réseau de communication sans fil tel que le réseau utilisé pour la téléphonie mobile.

L'étape de transmission 110 peut être réalisée à fréquence prédéterminée, par exemple toutes les heures ou sur demande du serveur, ou encore à chaque fois qu'on atteint un nombre prédéterminé de sélections.

Le procédé 100 comprend en outre une phase 112 de filtrage.

La phase de filtrage 112 comprend une étape 114 d'élimination des sélections réalisées lorsque la page affichée est une page de transition, telle qu'une page d'accueil, une page intermédiaire affichée entre deux questions, une page de remerciements, etc. Cette élimination est réalisée en fonction de l'identifiant de la page mémorisée en association avec chaque sélection à l'étape 108.

La phase de filtrage 112 comprend une étape 116 d'élimination des sélections réalisées, en réponse à une question, avant une durée minimale de lecture nécessaire à la lecture de la question. Pour ce faire, pour chaque page affichée, une durée de lecture minimale est ajoutée à l'heure d'affichage mémorisée à l'étape 104 pour ladite page. Chaque sélection dont l'heure de sélection, mémorisée à l'étape 108, se trouve entre l'heure d'affichage et celle obtenue après ajout, à cette dernière, de la durée minimale de lecture, est éliminée.

La durée minimale de lecture peut être identique à chaque question affichée. Alternativement, la durée minimale de lecture peut être prédéfinie pour chaque question. Dans ce cas, la durée minimale de lecture est lue dans un moyen de mémorisation en association avec l'identifiant de la question.

Lors d'une étape 118 un filtrage est réalisé pour éliminer des sélections répétées se trouvant dans une série incohérente, c'est-à-dire des sélections qui n'ont pas de rapport avec l'affichage réalisé, telles que par exemple des sélections aléatoires réalisées par des enfants. Cette élimination est réalisée en fonction des heures de sélection mémorisées à l'étape 108. Pour ce faire, l'étape 118 analyse les heures de sélection de toutes les sélections. Lorsqu'au moins trois sélections consécutives, formant une série, sont séparées, deux à deux, d'une durée minimale prédéterminée, alors toutes ces sélections correspondent à des sélections incohérentes. Chacune de ces sélections est alors éliminée, y compris la première de la série.

Lors d'une étape 120 un filtrage est réalisé pour éliminer des sélections répétées se trouvant dans une série cohérente, c'est-à-dire des sélections qui ont un rapport avec l'affichage réalisé, telles que par des doublons de sélections entrées par un utilisateur insistant. Cette élimination est réalisée en fonction des heures de sélection mémorisées lors de l'étape 120. Pour ce faire, l'étape 120 analyse les heures de sélection de toutes les sélections. Lorsqu'une série comprend exactement deux sélections identiques consécutives, et que ces deux sélections sont séparées d'une durée minimale prédéterminée, alors la deuxième sélection correspond à un doublon. Dans ce cas, uniquement l'une des deux sélections est éliminée et l'autre sélection est conservée.

Bien entendu, les étapes 114-120 peuvent être réalisées dans un autre ordre que celui qui vient d'être décrit.

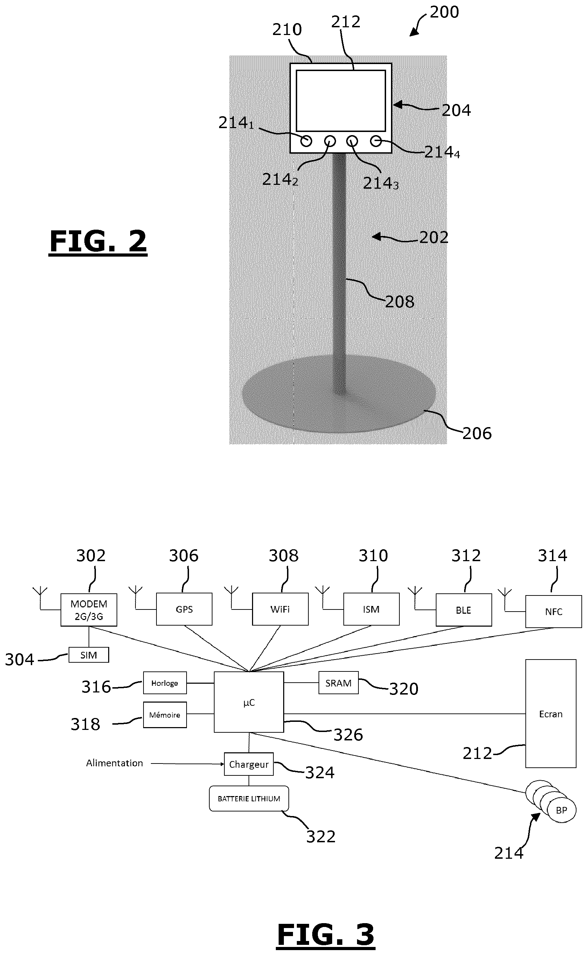

La FIGURE 2 est une représentation schématique d'une borne d'interaction qui peut être mise en œuvre dans un système selon l'invention.

La borne 200 est représentée sur la FIGURE 2 selon une vue de devant.

La borne 200 comprend un support 202 sur lequel est disposé un module d'interaction 204.

Le support 202 comprend un pied 206 prévu pour être disposé sur une surface d'accueil et d'un poteau 208 fixé au pied 206 au niveau de son extrémité basse et au module 204 au niveau de son extrémité supérieure.

Le poteau 208 peut également être remplacé par tout type de support adapté à la situation, tel que par exemple, de manière non exhaustive, une fixation murale, une fixation sur barre verticale, une fixation rayonnage, une table, etc.

Le module d'interaction 204 comprend une coque 210, par exemple étanche, dans/sur lequel est agencé un écran 212 d'affichage. L'écran d'affichage 212 peut être par exemple être un écran électrophorétique.

Le module d'interaction 204 comprend également, de manière non limitative, quatre boutons de sélection 214₁-214₄ permettant à un utilisateur de réaliser un choix parmi plusieurs propositions, en réponse à une question affichée sur l'écran d'affichage 212.

Le module d'interaction 204 est fixé au poteau 208 par l'intermédiaire de quatre vis de fixation (non représentées).

La coque 210 peut être réalisée en matière plastique, souple ou non, ou en métal ou encore en tout autre matériau adéquat et le support 202 peut être réalisé en plastique dur ou en métal ou encore en bois.

Le module d'interaction 204 comprend en outre un module de communication sans fil (non représenté) avec un serveur distant, une batterie interne (non représentée) pour l'alimenter, et une mémoire interne (non représentée).

La FIGURE 3 est une représentation schématique non limitative des composants électriques/électroniques d'un module d'interaction d'une borne d'interaction qui peut être mise en œuvre dans un système selon l'invention, tel que par exemple du module d'interaction 204 de la borne 200 de la FIGURE 2.

Le module d'interaction représenté sur la FIGURE 3 comprend, en plus des éléments décrits plus haut en référence à la FIGURE 2 :
- un modem 302 de communication 2G/3G ou 4G, associé à un lecteur de carte SIM 304 ;
- un module 306 de géolocalisation de type GPS ;
- un module 308 de communication suivant le protocole WIFI™ ;
- un module 310 de communication dans la bande ISM (pour « industriel, scientifique et médical ») ;
- un module 312 Bluetooth® Low Energy ;
- un module 314 de communication selon la technologie de communication en champ proche (NFC en anglais pour « Near Field Communication ») ;
- une horloge électronique 316 ;
- des moyens de mémorisation 318 et 320 telle qu'une mémoire flash, SRAM, carte SD, etc. ;
- une batterie 322, et
- un chargeur 324 pour recharger la batterie 322 depuis le secteur ou depuis un module de génération électrique de type solaire ou éolien (non représenté).

L'ensemble de ces composants, et plus généralement le fonctionnement général du module d'interaction, est géré par un microcontrôleur 326.

Le microcontrôleur 326 peut être configuré pour déclencher au moins une itération des étapes 104-110 décrites plus haut en référence à la FIGURE 1, et réalisées au niveau de la borne d'interaction.

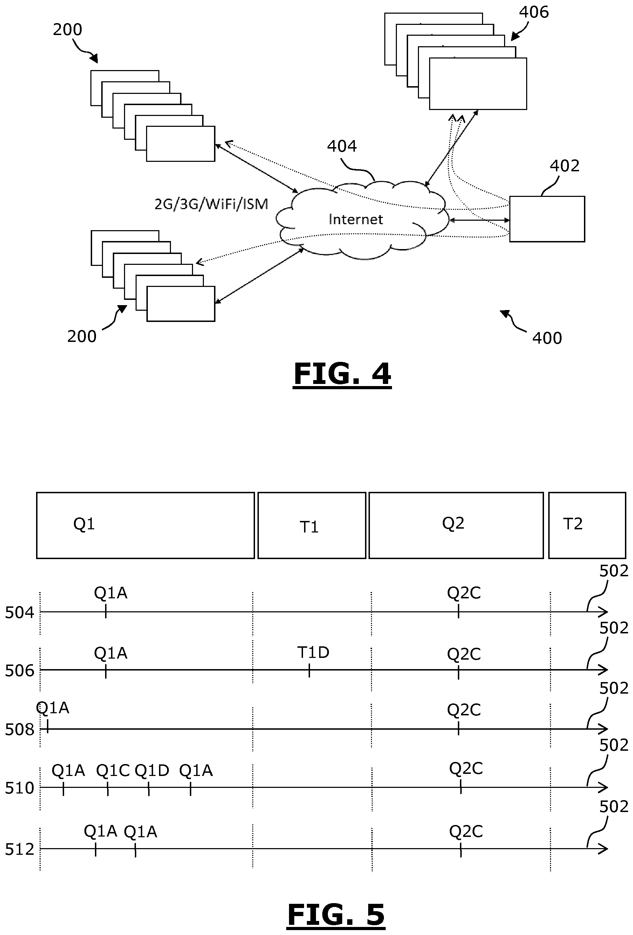

La FIGURE 4 est une représentation schématique d'un exemple non limitatif d'un système selon l'invention.

Le système 400 représenté sur la FIGURE 4 comprend une pluralité de bornes d'interaction, par exemples des bornes 200 représentées sur la FIGURE 2, disposées sur le même site ou des sites différents.

Chacune des bornes 200 est connectée à un serveur distant 402 au travers d'un réseau de communication 404, de type Internet, par l'intermédiaire d'une connexion 2G, 3G, 4G, 5G, WiFi™, ISM, etc.

Le serveur 402 et/ou chaque borne 200 est accessible au travers d'une interface homme/machine dédiée 406. Il est ainsi possible de configurer chaque borne 200 de manière indépendante ou groupée.

De plus, l'interface homme machine permet de consulter des données de fonctionnement relatives à chaque borne, mais également des données représentant les résultats des interactions avec les utilisateurs, tels que par exemple les choix réalisés par les utilisateurs par appui sur les boutons de sélection en réponse aux messages affichés sur l'écran d'affichage.

Le serveur 402 comprend des moyens de mémorisation et au moins un processeur (non représentés). Le serveur 402 est configuré pour mettre en œuvre les étapes 114-120 du procédé 100 décrit en référence à la FIGURE 1, et réalisées au niveau du serveur 402.

La FIGURE 5 est une représentation schématique d'exemples de filtrage non limitatifs réalisés conformément au procédé selon l'invention.

Tel que représenté sur la FIGURE 5, une question « Q1 » est affichée sur une première page, puis une page « T1» réalise une transition vers une question « Q2 », elle-même suivie d'une page de transition « T2 », ainsi de suite.

La flèche 502 représente le temps.

Les sélections sont indiquées par l'identifiant de la page en cours d'affichage associé à une lettre correspondant à l'identifiant du bouton sélectionné. Par exemple la sélection « Q1A » correspond à une sélection du bouton « A » pendant l'affichage de la question « Q1 ».

Dans le cas 504, la sélection « Q1A » est réalisée en réponse à la question « Q1 » après un délai d'affichage de la question Q1 considéré comme acceptable pour une lecture de la question « Q1 », et une sélection « Q2C » est réalisée en réponse à la question « Q2 » après un délai acceptable pour une lecture de la question « Q2 ». Dans le cas 504 ces deux sélections sont acceptées.

Dans le cas 506, une sélection « T1D » est réalisée pendant la page de transition « T1 ». La sélection « T1D » est donc éliminée. Les sélections Q1A et Q2C sont quant à elles acceptées.

Dans le cas 508, la sélection « Q1A » est réalisée très rapidement après le début de l'affichage de la question « Q1 ». La sélection « Q1A » est donc éliminée car elle ne respecte par une durée minimale nécessaire à la lecture de la question « Q1 ».

Dans le cas 510, une série de quatre sélections consécutives est réalisée en réponse à la question « Q1 » : « Q1A », « Q1C », « Q1D » et « Q1A ». Les sélections « Q1A », « Q1C », « Q1D » et « Q1A » sont séparées deux à deux d'une durée très courte. Cette série de sélections correspond à une série de sélections incohérentes, telle que par exemple des sélections réalisées par un enfant. Toutes les élections « Q1A », « Q1C », « Q1D » et « Q1A » sont éliminées.

Dans le cas 512, une série de deux sélections identiques consécutives est réalisée en réponse à la question « Q1 » : « Q1A » et « Q1A ». Les sélections « Q1A » et « Q1A » sont séparées d'une durée très courte. Cette série de sélections correspond à une sélection double, par exemple réalisées par un utilisateur insistant. Dans ce cas, l'une des deux sélections est éliminée et l'autre est conservée.

Bien sûr, l'invention n'est pas limitée aux exemples qui viennent d'être décrits et de nombreux aménagements peuvent être apportés à ces exemples sans sortir du cadre de l'invention tel que défini par les revendications.

## Revendications

1. Procédé (100) d'interaction avec des utilisateurs comprenant les étapes suivantes :
- détection (106) des sélections au niveau d'une borne d'interaction (200) comprenant au moins un bouton de sélection (214), et
- pour chaque sélection, transmission (110) par ladite borne (200), vers un serveur distant (402) :
∘ d'une donnée horaire, dite heure de sélection, représentant le moment de réalisation de ladite sélection, et
∘ lorsque la borne comporte plusieurs boutons de sélection, d'une donnée, dite bouton de sélection, relative au bouton sélectionné et associée à ladite donnée horaire ;
**caractérisé en ce qu'**il comprend une étape (114-120) de filtrage, par ledit serveur (402), d'au moins une sélection causée par un bouton de sélection défaillant, ladite étape de filtrage (114-120) comprenant :
- une détermination d'une durée séparant au moins deux sélections consécutives du même bouton de sélection en fonction des heures de sélection desdites sélections, et
- une élimination (120) de l'une au moins desdites sélections consécutives lorsque ladite durée est inférieure à une durée seuil prédéterminée.

2. Procédé (100) selon la revendication précédente, **caractérisé en ce qu'**il comprend une étape (104) d'affichage d'au moins une page sur un écran d'affichage de la borne :
- l'étape de transmission (110) comprenant une transmission, vers le serveur, d'une donnée, dite d'affichage, en association avec au moins une heure de sélection, et relative à la page affichée à ladite heure de sélection ; et
- l'étape de filtrage (114-120) étant en outre réalisée en fonction de ladite donnée d'affichage.

3. Procédé (100) selon la revendication précédente, **caractérisé en ce que** la donnée d'affichage comprend une donnée signalant si la page affichée est :
- une page comprenant une question, ou
- une page de transition ;
l'étape de filtrage (114) réalisant une élimination d'une sélection lorsque la donnée d'affichage qui lui est associée signale l'affichage d'une page de transition.

4. Procédé (100) selon l'une quelconque des revendications précédentes, **caractérisé en ce que** l'étape de filtrage (114-120) est en outre réalisée en fonction :
- d'une durée écoulée entre un début d'affichage d'une page et une sélection réalisée lors de l'affichage de ladite page, et
- d'une durée, dite durée minimum de lecture, prédéterminée.

5. Procédé (100) selon la revendication 4 et l'une quelconque des revendications 2 ou 3, **caractérisé en ce que** la donnée d'affichage associée à une heure de sélection comprend une donnée d'identification d'une question en cours d'affichage, la durée minimum de lecture étant déterminée en fonction de ladite donnée d'identification.

6. Procédé (100) selon la revendication 4 ou 5, **caractérisé en ce que** l'heure de sélection d'une sélection correspond à la durée écoulée entre un début d'affichage d'une question pour laquelle la sélection a été entrée, et ladite sélection.

7. Procédé (100) selon l'une quelconque des revendications 4 ou 5, **caractérisé en ce qu'**il comprend, pour chaque question, une transmission (110), de la borne (200) vers le serveur (402), d'une donnée horaire, dite heure d'affichage, représentant le moment où l'affichage de ladite question a commencé, la durée écoulée étant calculée en fonction de ladite heure d'affichage et de l'heure de sélection.

8. Procédé (100) selon l'une quelconque des revendications précédentes, **caractérisé en ce que**, l'étape de transmission (110) de donnée est réalisée à une fréquence prédéterminée, ou sur demande du serveur (402), ou encore à chaque sélection.

9. Système (400) d'interaction avec des utilisateurs comprenant :
- un serveur (402), et
- au moins une borne d'interaction (200) en communication avec ledit serveur (402) ;
configurés pour mettre en œuvre toutes les étapes du procédé (100) selon l'une quelconque des revendications précédentes.

10. Système (400) selon la revendication précédente, **caractérisé en ce qu'**au moins une borne (200) est en communication avec le serveur (402) au travers d'un réseau de communication sans fil (404).

## Patentansprüche

1. Verfahren (100) zur Interaktion mit Nutzern, mit den Schritten:
- Erfassung (106) der Auswahlvorgänge auf der Ebene einer Interaktionsstation (200), die zumindest einen Auswahlknopf (214) aufweist, und,
- für jeden Auswahlvorgang, Übertragung (110) durch die Station (200) an einen Fernserver (402):
∘ einer Zeitangabe, als Auswahlzeit bezeichnet, die den Realisierungsmoment der Auswahl darstellt, und,
∘ wenn die Station mehrere Auswahlknöpfe aufweist, einer Angabe, als Auswahlknopf bezeichnet, bezogen auf den ausgewählten Knopf und der Zeitangabe zugeordnet;
**dadurch gekennzeichnet, dass** das Verfahren einen Filterschritt (114-120) durch den Server (402) aufweist, von zumindest einem durch einen fehlerhaften Auswahlknopf verursachten Auswahlvorgang, wobei der Filterschritt (114-120) aufweist:
- eine Bestimmung einer Dauer, die zwischen zumindest zwei aufeinanderfolgenden Auswahlvorgängen des gleichen Auswahlknopfs liegt, in Abhängigkeit der Auswahlzeiten der Auswahlvorgänge, und
- eine Eliminierung (120) zumindest eines der aufeinanderfolgenden Auswahlvorgänge, wenn die Dauer geringer ist als eine vorbestimmte Schwellenwertdauer.

2. Verfahren (100) nach dem voranstehenden Anspruch, **dadurch gekennzeichnet, dass** es einen Anzeigeschritt (104) der Anzeige zumindest einer Seite auf einem Anzeigebildschirm der Station aufweist:
- wobei der Übertragungsschritt (110) eine Übertragung einer Angabe, als Anzeigeangabe bezeichnet, zu dem Server aufweist, die zumindest einer Auswahlzeit zugeordnet ist, und bezogen ist auf die zu der Auswahlzeit angezeigte Seite; und
- der Filterschritt (114-120) außerdem in Abhängigkeit der Anzeigeangabe durchgeführt wird.

3. Verfahren (100) nach dem voranstehenden Anspruch, **dadurch gekennzeichnet, dass** die Anzeigeangabe eine Angabe aufweist, die signalisiert, ob die angezeigte Seite:
- eine Seite ist, die eine Frage aufweist, oder
- eine Übergangsseite ist;
wobei der Filterschritt (114) eine Eliminierung des Auswahlvorgangs durchführt, wenn die ihm zugeordnete Anzeigeangabe die Anzeige einer Übergangsseite signalisiert.

4. Verfahren (100) nach einem der vorstehenden Ansprüche, **dadurch gekennzeichnet, dass** der Filterschritt (114-120) außerdem durchgeführt wird in Abhängigkeit:
- einer zwischen einem Anzeigebeginn einer Seite und einem bei Anzeige dieser Seite vorgenommenen Auswahlvorgang verstrichenen Zeit, und
- einer vorbestimmten Dauer, als minimale Lesezeit bezeichnet.

5. Verfahren (100) nach Anspruch 4 und einem der voranstehenden Ansprüche 2 oder 3, **dadurch gekennzeichnet, dass** die einer Auswahlzeit zugeordnete Anzeigeangabe eine Identifizierungsangabe einer in Anzeige begriffenen Frage aufweist, wobei die minimale Lesezeit als Funktion dieser Identifizierungsangabe bestimmt wird.

6. Verfahren (100) nach Anspruch 4 oder 5, **dadurch gekennzeichnet, dass** die Auswahlzeit eines Auswahlvorgangs einer Dauer entspricht, die zwischen einem Anzeigebeginn einer Frage, für die der Auswahlvorgang vorgenommen wurde, und dem Auswahlvorgang verstrichen ist.

7. Verfahren (100) nach einem der vorstehenden Ansprüche 4 oder 5, **dadurch gekennzeichnet, dass** es, für jede Frage, eine Übertragung (110) einer Zeitangabe, als Anzeigezeit bezeichnet, von der Station (200) zu dem Server (402) aufweist, wobei die Anzeigezeit den Moment repräsentiert, zu dem die Anzeige der Frage beginnt und wobei die verstrichene Dauer in Abhängigkeit der Anzeigezeit und der Auswahlzeit berechnet wird.

8. Verfahren (100) nach einem der vorstehenden Ansprüche, **dadurch gekennzeichnet, dass** der Übertragungsschritt (110) der Angabe mit einer vorbestimmten Häufigkeit, oder auf Anfrage des Servers (402), oder bei jedem Auswahlvorgang durchgeführt wird.

9. System (400) zur Interaktion mit Nutzern, wobei die Vorrichtung aufweist:
einen Server (402) und
zumindest eine Interaktionsstation (200), die mit dem Server (402) kommuniziert;
wobei die Vorrichtung eingerichtet ist, um alle Schritte des Verfahrens (100) nach einem der vorstehenden Ansprüche durchzuführen.

10. System (400) nach dem voranstehenden Anspruch, **dadurch gekennzeichnet, dass** zumindest eine Station (200) mit dem Server (402) durch ein drahtloses Kommunikationsnetzwerk (404) kommuniziert.

## Claims

1. A method (100) for interaction with users, comprising the following steps:
- detection (106) of the selections on an interaction terminal (200) comprising at least one selection button (214), and
- for each selection, transmission (110) by said terminal (200) to a remote server (402):
∘ of a time data, called selection time data, representing the moment when said selection was made, and
∘ where the terminal has several selection buttons, of a data, called selection button data, relating to the selected button and associated with said time data;
**characterized in that** it comprises a step (114-120) of filtering out, by said server (402), of at least one selection caused by a defective selection button, said filtering step (114-120) comprising:
- determining a period separating at least two consecutive selections of the same selection button as a function of the selection times of said selections, and
- eliminating (120) at least one of said consecutive selections if said period is shorter than a predetermined threshold period.

2. The method (100) according to the preceding claim, **characterized in that** it comprises a step (104) of displaying at least one page on a display screen of the terminal:
- the transmission step (110) comprising a transmission, to the server, of a data, called display data, associated with at least one selection time, and relating to the page displayed at said selection time; and
- the filtering step (114-120) also being carried out as a function of said display data.

3. The method (100) according to the preceding claim, **characterized in that** the display data comprises a data indicating whether the page displayed is:
- a page comprising a question, or
- a transition page;
the filtering step (114) carrying out an elimination of a selection if the display data which is associated with it indicates the display of a transition page.

4. The method (100) according to any one of the preceding claims, **characterized in that** the filtering step (114-120) is also carried out as a function:
- of a period elapsed between the start of a display of a page and a selection carried out during the display of said page, and
- of a predetermined period, called minimum reading period.

5. The method (100) according to claim 4 and any one of claims 2 or 3, **characterized in that** the display data associated with a selection time comprises a data for identification of a question being displayed, the minimum reading period being determined as a function of said identification data.

6. A method (100) according to claim 4 or 5, **characterized in that** the selection time for a selection corresponds to the period elapsed between the start of a display of a question for which the selection has been entered and said selection.

7. The method (100) according to any one of claims 4 or 5, **characterized in that** it comprises, for each question, a transmission (110), from the terminal (200) to the server (402), of a time data, called display time data, representing the moment when the display of said question started, the period elapsed being calculated as a function of said display time and the selection time.

8. The method (100) according to any one of the preceding claims, **characterized in that** the step of data transmission (110) is carried out at a predetermined rate, or when requested by the server (402), or else at each selection.

9. A system (400) for interaction with users, comprising:
- a server (402), and
- at least one interaction terminal (200) communicating with said server (402);
configured to implement all the steps of the method (100) according to any one of the preceding claims.

10. The system (400) according to the preceding claim, **characterized in that** at least one terminal (200) communicates with the server (402) through a wireless communication network (404).
